# EUROPEAN PATENT APPLICATION

(11) **EP 4 752 017 A1**
(43) Date of publication of application: **03.06.2026**
(21) Application number: 24216232.9
(22) Date of filing: 28.11.2024
(51) Int. Cl.: B60T 13/66, B60T 13/74, B61H 5/00

(54) **BRAKE ACTUATOR FOR A BRAKE OF A RAIL VEHICLE, BRAKE SYSTEM COMPRISING THE BRAKE ACTUATOR, RAIL VEHICLE, AND METHOD FOR ESTIMATING A BRAKE FORCE OF THE BRAKE ACTUATOR**

(71) Applicant: KB Intellectual Property GmbH & Co. KG, 82049 Pullach (DE)
(72) Inventor: KAKONYI, Robert, 6300 Kalocsa (HU)

(57) **Abstract**

A brake actuator (3) comprises: a housing (6), a rotating motor (7), a rotating body (8), a spindle (9), a rotational sensor (10), and a motor brake (11). The rotating body (8) is supported in the housing (6), a rotation of the rotating body (8) with respect to the spindle (9) generates a motion of the spindle (9), wherein the brake actuator (3) generates a brake force (F) by the motion of the spindle (9), the rotating motor (7) generates a motor torque for the rotation of the rotating body (8), the rotational sensor (10) detects an angular position of the rotating body (8), and the motor brake (11) locks the rotation of the rotating body (8) with respect to the housing (6) such that, in a locked state, the rotating body (8) can freely rotate around the rotational axis (4) about a predefined angle (α).

## Description

The invention relates to a brake actuator for a brake of a rail vehicle, a brake system comprising the brake actuator, the rail vehicle, and a method for estimating a brake force of the brake actuator, in particular, for estimating a parking brake force.

Usually, in an electromechanical brake actuator, a push force of a spindle for generating a brake force applied by a brake pad to, e.g., a brake disc is measured by a force sensor. This configuration works in any operation mode, for example, as a parking brake, an emergency brake, and service brake applications. However, the provision of the force sensor causes additional efforts in the provision of the components and in the assembly.

In cases of brake operations including movements of components of the brake actuator, solutions without a sensor are conceivable when the brake force can be determined by detecting physical quantities representing the brake force. However, in a stationary condition of the brake actuator, such as a parking brake mode, such a solution does not work.

Therefore, the object underlying the invention is to remedy the above disadvantages and to provide a reliable determination of a brake force without additional sensors.

The object is achieved by a brake actuator according to claim 1, a brake system according to claim 5, a rail vehicle according to claim 6, and methods according to claims 7 and 12.

According to an aspect of the invention, a brake system for a rail vehicle comprises a brake actuator comprising a housing, a rotating motor, a rotating body, a spindle, a rotational sensor, and a motor brake, wherein the rotating body is configured to be supported rotatably around a rotational axis in the housing, the spindle and the rotating body respectively comprise parts of a threaded joint and, by a rotation of the rotating body with respect to the spindle, the spindle and the rotating body are configured to generate a motion of the spindle in direction of the rotational axis with respect to the rotating body, wherein the brake actuator is configured to generate a brake force by the motion of the spindle in a direction of the rotational axis. The rotating motor is configured to generate a motor torque for the rotation of the rotating body with respect to the spindle, the rotational sensor is configured to detect an angular position of the rotating body with respect to the housing, the motor brake is configured to lock the rotation of the rotating body with respect to the housing in such a manner that, in a locked state of the motor brake, the rotating body can freely rotate around the rotational axis about a predefined angle.

The characteristic that the rotating body can freely rotate around the rotational axis about a predefined angle in a locked state of the motor brake means that the rotating body can rotate around the rotational axis without or with little, insignificant, frictional resistance within the predefined angle. The rotational sensor has a resolution that ensures a detection of the rotation of the rotating body within the predefined angle.

By such a brake actuator, due to a possible minimum motion of the rotating body within the predefined angle which does not affect the brake force, the brake force can be estimated for a non-stationary but quasi-stationary operation such as a parking brake mode, nevertheless, without an additional force sensor.

In an advantageous implementation of the brake actuator, the motor brake and the rotating body comprise a form-fit connection device having an angular backlash configured such that the rotating body can freely rotate around the rotational axis about the predefined angle.

In a further advantageous implementation of the brake actuator, the motor brake and the housing comprise a form-fit connection device having an angular backlash configured such that the rotating body can freely rotate around the rotational axis about the predefined angle.

In a further advantageous implementation, the predefined angle α is less than 2°, preferable, less than 1°.

According to a further aspect of the invention, a brake system for a rail vehicle comprises: an above-described brake actuator and a controller, wherein the controller is configured to estimate the brake force from the motor torque in the locked state of the motor brake at a detected change of the angular position of the rotating body by the rotational sensor.

According to a yet further aspect of the invention, a rail vehicle comprises an above-described brake system.

According to a further aspect of the invention, a method for estimating a brake force of an above described brake actuator comprises the steps: actuating the rotating motor for generating the motor torque for the rotating body until, based on a relationship between the brake force and a motor torque, a predefined brake force is achieved; locking the rotating body to a locked state by the motor brake such that the rotating body can freely rotate around the rotational axis about the predefined angle; deactivating the rotating motor or actuating the rotating motor for generating a motor torque lower than the motor torque for achieving the predefined brake force; actuating the rotating motor for increasing the motor torque for the rotating motor until a change of the angular position of the rotating body with respect to the housing within the predefined angle is detected by the rotational sensor; determining the motor torque at the change of the angular position; and estimating the brake force from the relationship between the brake force and the motor torque for the rotating motor at the change of the angular position.

In an advantageous implementation of the method, it further comprises the steps: deactivating the rotating motor in the locked state of the rotating body; and re-actuating the rotating motor for increasing the motor torque until a change of the angular position of the rotating body with respect to the housing within the predefined angle is detected; determining the motor torque at the change of the angular position; and estimating the brake force from the relationship between the brake force and the motor torque for the rotating body at the change of the angular position.

In a further advantageous implementation of the method, the motor torque is determined by means of a motor current, and the relationship between the brake force and a motor torque is determined under consideration of a friction resistance of the brake actuator, wherein the friction resistance is proportional to a difference between motor torques at transitions in case of increasing and decreasing directional motor torque changes.

According to an advantageous implementation of the method, a parking brake force is determined by the method.

According to another advantageous implementation of the method, a non-parking brake force is determined by the method.

According to a further aspect of the invention, a method for releasing a motor brake subsequently further comprises the steps: actuating the rotating motor until, based on the relationship between the brake force and the motor torque, an actual brake force is achieved, and subsequently releasing the motor brake.

Below, the invention is elucidated by means of embodiments referring to the drawings.

In particular,
Fig. 1 shows a schematic illustration of a side view of a brake system including a brake actuator having a rotational axis in a rail vehicle;
Fig. 2 shows a view of the brake actuator in a direction of the rotational axis; and
Fig. 3 shows an enlarged view of portion A of Fig. 2.

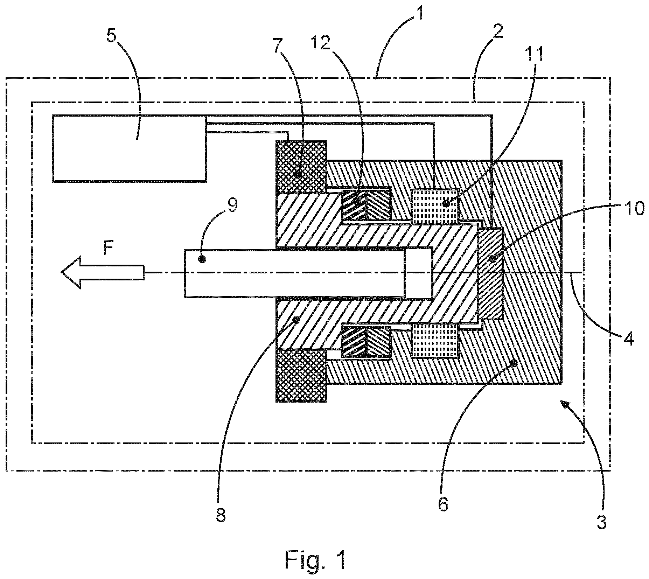

**Fig. 1** shows a schematic illustration of a rail vehicle 1 including a brake system 2 with a side view of a brake actuator 3 having a rotational axis 4.

The brake system 2 comprises the brake actuator 3 and a controller 5.

The brake actuator 3 comprises a housing 6, a rotating motor 7, a rotating body 8, a spindle 9, a rotational sensor 10 and a motor brake 11.

The spindle 9 and the rotating body 8 respectively comprise parts of a threaded joint. In particular, the spindle 9 comprises a screw thread and the rotating body 8 comprises an internal screw thread. By a rotation of the rotating body 8 with respect to the spindle 9, the spindle 9 and the rotating body 8 generate a motion of the spindle 9 in direction of the rotational axis 4 with respect to the rotating body 8. By this motion, the brake actuator 3 generates a brake force F.

For supporting the brake force F against the housing 6, the rotating body 8 is supported rotatably around the rotational axis 4 in the housing 6 by an axial bearing 12. Furthermore, the spindle 9 is supported in the brake in a non-rotatable manner (not shown).

The rotating motor 7 generates a motor torque for the rotation of the rotating body 8 with respect to the spindle 9. In this embodiment, the rotating motor 7 is formed by a stator of an electric motor and the rotating body 8 is formed by a rotor of the electric motor. In alternative embodiments, the structure of the rotating motor and the rotating body can be different, e.g., an electric motor having a separate rotating body attached to the electric motor.

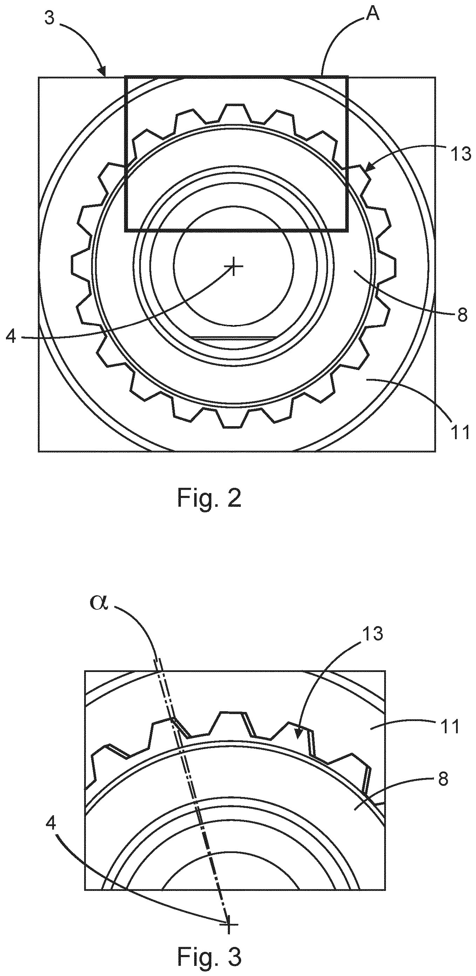

The motor brake 11 is attached between the rotating body 8 and the housing 6 and locks the rotation of the rotating body 8 with respect to the housing 6. As described below, the motor brake 11 locks the rotating body 8 in such a manner that, in a locked state of the motor brake 11, the rotating body 8 can freely rotate around the rotational axis 4 about a predefined angle α (see Fig. 3).

The characteristic that the rotating body 8 can freely rotate around the rotational axis 4 about a predefined angle in a locked state of the motor brake 11 means that the rotating body 8 can rotate around the rotational axis 4 without or with little, insignificant, frictional resistance within the predefined angle.

The rotational sensor 10 is attached between the rotating body 8 and the housing 6 and detects an angular position of the rotating body 8 with respect to the housing 6. The rotational sensor 10 has a resolution that ensures a detection of the rotation of the rotating body 8 with respect to the housing 6 within the predefined angle.

The controller 5 is connected to the rotating motor 7, the rotational sensor 10, and the motor brake 11. The controller 5 controls activating and deactivating of the rotating motor 7 according to an external brake request or brake release request and, also, according to a request for estimating the brake force. Further, the controller 5 controls the motor brake 11 for locking and unlocking the rotating body 8. Moreover, the controller 5 estimates the brake force F from a motor torque in a locked state of the motor brake 11 at a detected change of the angular position of the rotating body 8 with respect to the housing 6. In an alternative embodiment, the brake force F is not estimated by the controller 9 but by an additional estimation device.

**Fig. 2** shows a view of the brake actuator 3 in a direction of the rotational axis 4; and

**Fig. 3** shows an enlarged view of portion A of Fig. 2.

The motor brake 11 and the rotating body 8 comprise a form-fit connection device 13, particularly a splined shaft connection, having an angular backlash configured such that the rotating body 8 can freely rotate around the rotational axis 4 about the predefined angle α. Based on a tolerance specification, particularly "N42 x 2 x 20 x 8G x 8f", after tolerance calculations according to the present standard DIM5480_1, an angular backlash of 0.09° to 0.43° as being the predefined angle α is provided. In alternative embodiments, other tolerance specifications, such as ""N42 x 2 x 20 x 8G x 8a" providing an angular backlash of 0.33° to 0.67° as being the predefined angle α, or "N42 x 2 x 20 x 8A x 8a" providing an angular backlash of 0.6° to 0.94 as being the predefined angle α are used. In further alternative embodiments, other form-fit connection devices, such as polygon connection devices are possible. Further, in alternative embodiments, the predefined angle α is less than 2°, preferably, less than 1°.

In further alternative embodiments, the motor brake 11 and the housing 6 comprise a form-fit connection device (not shown) having an angular backlash configured such that the rotating body 8 can freely rotate around the rotational axis 4 about the predefined angle.

In use, a method for estimating the brake force F of the brake actuator 3 comprises the steps: actuating the rotating motor 7 for generating the motor torque for the rotating body 8 until, based on a relationship between the brake force F and the motor torque, a predefined brake force is achieved; locking the rotating body 8 to a locked state by the motor brake 11 such that the rotating body 8 can freely rotate around the rotational axis 4 about the predefined angle α; actuating the rotating motor 7 for increasing the motor torque for the rotating body 8 until a change of the angular position of the rotating body 8 with respect to the housing 6 within the predefined angle α is detected by the rotational sensor 10; determining the motor torque at the change of the angular position; and estimating the brake force F from the relationship between the brake force F and the motor torque for the rotating body 8 at the change of the angular position.

After locking the rotating body by the motor brake 11, the motor torque can be set to zero or a small negative value for minimally releasing the brake force F. Therefore, a counter torque of the brake force F or the releasing motor torque minimally rotates the rotating body 8 against a braking direction within the backlash. The counter torque of the brake force is typically higher than friction torques in the system. Hence, after a short delay, the sign of the torque is always in an apply direction since only the motor brake 11 generates counter torque against the torque generated by the brake force. Subsequently, the motor torque can be increased again to observe whether the angular position changes equal to the predefined angle.

By the actuation of the rotating motor 7 until the predefined brake force F is achieved, a required brake force F, e.g., for a parking braking or a service braking, is provided. Because of the locking of the rotation body 8, the achieved required brake force can basically be maintained even though the rotating motor 7 is deactivated. Since the resolution of the rotational sensor is set such that the change of the angular position within the predefined angle α is ensured, the change of the angular position of the rotating body 8 due to an increasing motor torque actuating the rotating motor 7 can be detected in a quasi-stationary state since the brake force can be estimated without releasing the motor brake 11 of the brake actuator 3. This ensures that the braking force F does not or only minimally and insignificantly change during the estimation. The reason is that a change of the angular position in a range of less than 1° causes a change of the brake force of about 10 N, whereas a typical brake force is between 3 kN and 8 kN which is three orders higher than the change of the brake force F during the estimation.

For improving precision or accuracy, the estimation can be repeated, i.e., the steps: deactivating the rotating motor 7 in the locked state of the rotating body 8; re-actuating the rotating motor 7 for increasing the motor torque until a change of the angular position of the rotating body 8 with respect to the housing 6 within the predefined angle α is detected by the rotational sensor 10; determining the motor torque at the change of the angular position; and estimating the brake force from the relationship between the brake force and the motor torque for the rotating body at the change of the angular position, are repeated, wherein the mean of all values of recorded transients are used. In alternative embodiments, the values only in release directional movements are used to have a lower estimate, the value only in the apply directional movements are used to have an upper estimate for the brake force or the average of the recorded motor torque values are used, where the number of apply and release directional transients are the same.

The motor torque is determined by means of a motor current, and the relationship between the brake force F and a motor torque is determined under consideration of a friction resistance of the brake actuator 3, wherein the friction resistance is proportional to a difference between motor torques at transitions in case of increasing and decreasing directional motor torque changes. The basic relationship between the brake force F and a motor torque or motor current is determined in advance by a test equipment. A brake force - motor torque function is determined at an end of line tests and is stored in the controller. In alternative embodiments, this information is updated during brake system startup with a designated movement cycle.

By the estimation in this manner, the parking brake force is determined. Thereby, the parking brake force can be monitored and corrected during a long term parking state.

In alternative embodiments, a non-parking brake force is determined by the method. During a brake application on a moving rail vehicle, usually, the rotating motor 7 has to be continuously active until the rail vehicle does not have a full stop or the brakes are released. Nevertheless, if the rotating body 8 is locked at a position for maintaining the current braking force, the rotating motor 7 can be switched off to save electrical power or to reduce thermal load of the rotating motor 7 or the controller 5 of the brake system 2, in particular, in case of continuous braking cases in long downhill trips. In these cases, the current braking force can be monitored by this method.

In further alternative embodiments, a method for releasing a motor brake comprises the steps: actuating the rotating motor 7 until, based on the relationship between the brake force F and the motor torque, an actual brake force F is achieved, and subsequently releasing the motor brake. This method is used since it is a general recommendation that the motor brake 11 shall not be released under load. By this method, wear of the motor brake 11 can be reduced by setting the motor torque equal to the actual brake force which means that the load on the motor brake 11 becomes zero or near zero. Hence, during the subsequent releasing of the motor brake 11 the motor brake 11 is free from the load.

While the invention has been illustrated and described in detail in the drawings and the foregoing description, such illustration and description are to be considered illustrative or exemplary and not restrictive. The invention defined in the claims is not limited to the disclosed embodiments. From reading the present disclosure, other modifications will be apparent to a person skilled in the art. Such modifications may involve other features, which are already known in the art and may be used instead of or in addition to features already described herein. In the claims, the word "comprising" does not exclude other elements or steps, and the indefinite article "a" or "an" does not exclude a plurality.

### LIST OF REFERENCE SIGNS

- 1: rail vehicle
- 2: brake system
- 3: brake actuator
- 4: rotational axis
- 5: controller
- 6: housing
- 7: rotating motor
- 8: rotating body
- 9: spindle
- 10: rotational sensor
- 11: motor brake
- 12: axial bearing
- 13: form-fit connection device

## Claims

1. A brake actuator (3) for a brake of a rail vehicle (1), the brake actuator (3) comprising:
a housing (6),
a rotating motor (7),
a rotating body (8),
a spindle (9),
a rotational sensor (10), and
a motor brake (11),
wherein
the rotating body (8) is configured to be supported rotatably around a rotational axis (4) in the housing (6),
the spindle (9) and the rotating body (8) respectively comprise parts of a threaded joint and, by a rotation of the rotating body (8) with respect to the spindle (9), the spindle (9) and the rotating body (8) are configured to generate a motion of the spindle (9) in direction of the rotational axis (4) with respect to the rotating body (8), wherein the brake actuator (3) is configured to generate a brake force (F) by the motion of the spindle (9) in a direction of the rotational axis (4),
the rotating motor (7) is configured to generate a motor torque for the rotation of the rotating body (8) with respect to the spindle (9),
the rotational sensor (10) is configured to detect an angular position of the rotating body (8) with respect to the housing (6), and
the motor brake (11) is configured to lock the rotation of the rotating body (8) with respect to the housing (6) in such a manner that, in a locked state of the motor brake (11), the rotating body (8) can freely rotate around the rotational axis (4) about a predefined angle (α).

2. The brake actuator (3) of claim 1, wherein
the motor brake (11) and the rotating body (8) comprise a form-fit connection device (13) having an angular backlash configured such that the rotating body (8) can freely rotate around the rotational axis (4) about the predefined angle (α).

3. The brake actuator (3) of claim 1 or 2, wherein
the motor brake (11) and the housing (6) comprise a form-fit connection device having an angular backlash configured such that the rotating body (8) can freely rotate around the rotational axis (4) about the predefined angle (α).

4. The brake actuator (3) of anyone of the claims 1 to 3, wherein
the predefined angle α is less than 2°, preferable, less than 1°.

5. A brake system (2) for a rail vehicle (1), the brake system (2) comprising:
a brake actuator (3) of anyone of the preceding claims, and
a controller (5),
wherein
the controller (5) is configured to estimate the brake force (F) from the motor torque in the locked state of the motor brake (11) at a detected change of the angular position of the rotating body (8) by the rotational sensor.

6. A rail vehicle (1) comprising a brake system (2) of claim 5.

7. A method for estimating a brake force (F) of a brake actuator (3) of anyone of the claims 1 to 4, the method comprising the steps:
actuating the rotating motor (7) for generating the motor torque for the rotating body (8) until, based on a relationship between the brake force (F) and the motor torque, a predefined brake force (F) is achieved;
locking the rotating body (8) to a locked state by the motor brake (11) such that the rotating body (8) can freely rotate around the rotational axis (4) about the predefined angle (α);
deactivating the rotating motor (7) or actuating the rotating motor (7) for generating a motor torque lower than the motor torque for achieving the predefined brake force (F);
actuating the rotating motor (7) for increasing the motor torque for the rotating body (8) until a change of the angular position of the rotating body (8) with respect to the housing (6) within the predefined angle (α) is detected by the rotational sensor (10);
determining the motor torque at the change of the angular position; and
estimating the brake force (F) from the relationship between the brake force (F) and the motor torque for the rotating body (8) at the change of the angular position.

8. The method of claim 7, further comprising the steps:
deactivating the rotating motor (7) in the locked state of the rotating body (8);
re-actuating the rotating motor (7) for increasing the motor torque until a change of the angular position of the rotating body (8) with respect to the housing (6) within the predefined angle (α) is detected,
determining the motor torque at the change of the angular position; and
estimating the brake force (F) from the relationship between the brake force (F) and the motor torque for the rotating body (8) at the change of the angular position.

9. The method of claim 7 or 8, wherein
the motor torque is determined by means of a motor current, and
the relationship between the brake force (F) and a motor torque is determined under consideration of a friction resistance of the brake actuator (3), wherein the friction resistance is proportional to a difference between motor torques at transitions in case of increasing and decreasing directional motor torque changes.

10. The method of anyone of claims 7 to 9, wherein
a parking brake force is determined by the method.

11. The method of anyone of claims 7 to 9, wherein
a non-parking brake force is determined by the method.

12. A method for releasing a motor brake (11) comprising the steps of anyone of claims 7 to 9, subsequently further comprising the steps:
actuating the rotating motor (7) until, based on the relationship between the brake force (F) and the motor torque, an actual brake force (F) is achieved, and
subsequently, releasing the motor brake (11).
